## Europäisches Patentamt
## European Patent Office
## Office européen des brevets

(19)

(11) Veröffentlichungsnummer : **0 087 002**
**B1**

(12) **EUROPÄISCHE PATENTSCHRIFT**

(45) Veröffentlichungstag der Patentschrift :
02.12.87

(51) Int. Cl.⁴ : **G 01 L 3/10**

(21) Anmeldenummer : 83100875.0

(22) Anmeldetag : 31.01.83

(54) Verfahren zur berührungslosen Messung statischer und dynamischer Drehmomente.

(30) Priorität : 19.02.82 DE 3206008

(43) Veröffentlichungstag der Anmeldung :
31.08.83 Patentblatt 83/35

(45) Bekanntmachung des Hinweises auf die Patenterteilung : 02.12.87 Patentblatt 87/49

(84) Benannte Vertragsstaaten :
FR GB IT

(56) Entgegenhaltungen :
EP-A- 0 046 517
DE-A- 3 008 584
AUTOMATION AND REMOTE CONTROL, Band 33, Nr. 7, Juli 1972, Seiten 1241-1242, New York, USA; YU.D.ZHELEZNOV et al.: "Phase relations in a eddy-current strip-metal stress sensor"
SOVIET INSTRUMENTATION AND CONTROL JOURNAL, Nr. 3, März 1971, Seiten 65-67, Oxford, GB; A.B.CHELYUSTKIN et al.: "A contactless magnetically anisotropic transducer"

(73) Patentinhaber : Licentia Patent-Verwaltungs-GmbH
Theodor-Stern-Kai 1
D-6000 Frankfurt/Main 70 (DE)

(72) Erfinder : Winterhoff, Horst, Dipl.-Phys.
Kiefernweg 8
D-6072 Dreieich (DE)

(74) Vertreter : Lertes, Kurt, Dr. et al
Licentia Patent-Verwaltungs-GmbH Theodor-Stern-Kai 1
D-6000 Frankfurt/M 70 (DE)

## Beschreibung

Die Erfindung betrifft ein Verfahren zur berührungslosen Messung statischer und dynamischer Drehmomente einer Welle als Prüfling, wobei auf der Prüflingsoberfläche ein magnetisches Wechselfeld erzeugt wird und die durch das auftretende Drehmoment hervorgerufene Permeabilitätsänderung mittels eines Magnetjochs als elektrische Spannung abnehmbar und aus dieser ableitbar ist und ein Anordnung gemäß dem Oberbegriff des Anspruchs 3.

Ein derartiges Verfahren und eine derartige Vorrichtung sind aus der DE-A-3 008 584 bekannt. Als Erregungsteil dient ein primäres Magnetjoch, das die Welle als Prüfling umfaßt. Zur Erfassung der durch das auftretende Drehmoment hervorgerufenen Permeabilitätsänderung dient ein aus zwei sekundären Jochringen bestehendes Magnetjoch, wobei die sekundären Jochringe ebenso wie der primäre Jochring die gesamte Welle umfassen. Das bekannte Verfahren läßt sich somit nur dann durchführen, wenn es gelingt, die Welle als Prüfling mit den Jochringen zu umgreifen. Dies ist in vielen Fällen überhaupt nicht oder nur äußerst schwierig zu erreichen.

Bei dem bekannten Verfahren tritt auch das Problem auf, daß sich die Meßspannung mit einer Abstandsänderung zwischen dem Prüfling und dem Magnetjoch in unerwünschter Weise ändert. Aus der Druckschrift « Automation and Remote Control », Band 33, Nr. 7, Juli 1972, Seiten 1241/1242, New York, USA, ist es bekannt, die Abhängigkeit des Meßsignals bei der berührungslosen Messung von Spannungen in ferromagnetischen Materialien vom Abstand Magnetjoch-Prüfling mittels eines Resonanzkreises zu verringern. Der Resonanzkreis wird aus der Induktivität der Meßwicklung und einem dieser zugeordneten Kondensator gebildet, wodurch eine Korrektur des Meßsignals erzielt wird.

Ausgehend von dem eingangs definierten Verfahren liegt der Erfindung die Aufgabe zugrunde, ein Verfahren und eine Anordnung zur Drehmomentmessung verfügbar zu machen, bei dem die magnetische Anordnung die Welle nicht mehr umfaßt und bei dem die Meßspannung im wesentlichen unabhängig von einer Abstandsänderung zwischen dem Prüfling und dem Magnetjoch ist.

Diese Aufgabe wird — ausgehend vom eingangsdargelegten Verfahren — gemäß der Erfindung dadurch gelöst, daß das Wechselfeld mittels einer Erregerwicklung auf einem Innenkern des Magnetjochs erzeugt wird, wobei der Prüfling bis in seinen Sättigungsbereich ummagnetisiert wird und die Erregerwicklung und ein dieser zugeordneter Kondensator einen auf die Erregerfrequenz abgestimmten Resonanzschwingkreis bilden, bei dem die durch das auftretende Drehmoment hervorgerufene Permeabilitätsänderung der Prüflingsoberfläche mittels des sondenförmigen, an den Prüfling heranbringbaren, topfförmigen Magnetjochs mit vier am Rand befindlichen Polstücken erfaßt wird, deren Polflächen der Prüflingsoberfläche gegenüberstehen, wobei die Rand-Polstücke mit zu einer magnetischen Brücke verschalteten Wicklungen versehen sind.

Bei diesem Verfahren findet keine Korrektur des Meßsignals statt, sondern es wird die Erregung des Prüflings von vornherein auf eine Abstandsänderung abgestimmt, wobei diese Abstimmung in Anpassung an die Magnetjochausbildung stattfindet.

Eine Anordnung zur Durchführung des Verfahrens besteht — ausgehend von der Anordnung gemäß dem Oberbegriff des Anspruchs 3 — darin, daß das Magnetjoch sondenförmig ausgebildet ist und vier am Rand befindliche Polstücke aufweist und die Rand-Polstücke mit zu einer magnetischen Brücke verschalteten Wicklungen versehen sind und daß der Erregungsteil, durch den der Prüfling bis in seinen Sättigungsbereich ummagnetisiert werden kann, eine Erregerwicklung und auf einem Innenkern des Magnetjochs und einen dieser zugeordneten Kondensator aufweist, die einen auf die Erregerfrequenz abgestimmten Resonanzschwingkreis bilden.

Weiterbildungen der Erfindung sind den Ansprüchen 2 und 4 zu entnehmen.

Das Wesen der Erfindung soll anhand eines in der Zeichnung schematisch dargestellten Ausführungsbeispiels näher erläutert werden. Es zeigen :

Fig. 1 einen an einen Prüfling (Welle) angesetzten Drehmomentsensor mit Meßwicklungen und einer Erregerwicklung,

Fig. 2 die Zusammenschaltung der Meßwicklungen des Drehmomentsensors und eine diesem nachgeordnete Meßelektronik und

Fig. 3 ein Diagramm des Meßsignals in Abhängigkeit von der Abstandsänderung Sensor-Prüfling.

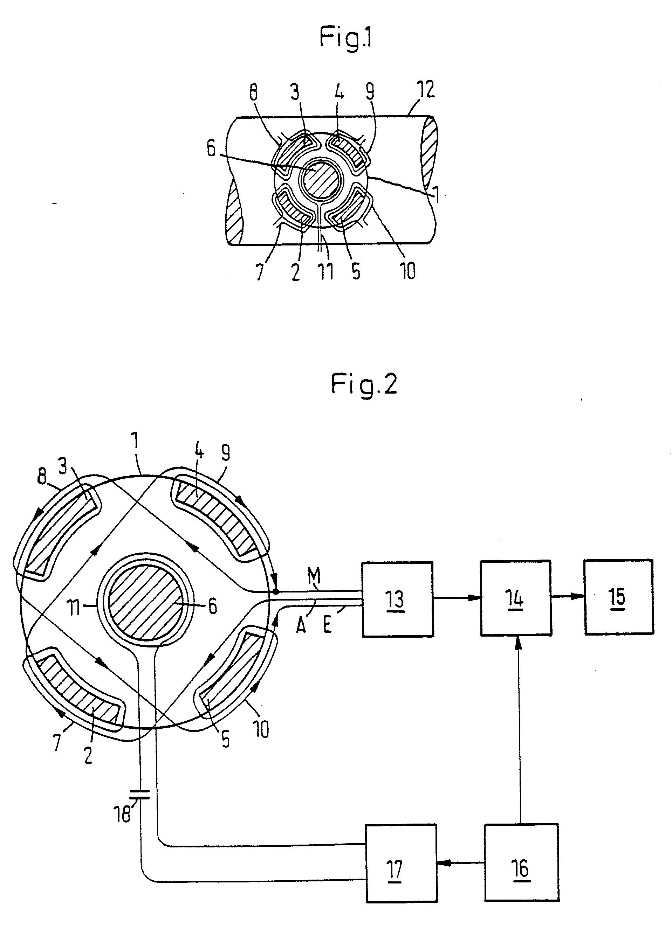

Wie aus Fig. 1 ersichtlich, ist der an eine Welle angesetzte, in etwa natürlicher Größe dargestellte Drehmomentsensor ein weichmagnetischer (Ferrit-)Schalenkern 1 mit vier Jochsegmenten 2 bis 5 und einem Innenkern 6. Die Jochsegmente sind mit Meßwicklungen 7 bis 10, und der Innenkern 6 ist mit einer Erregerwicklung 11 versehen. Wie aus der Fig. 2 genauer ersichtlich, sind die auf den Jochsegmenten gegenüberliegend angebrachten Meßwicklungen 7, 9 sowie 8, 10 in Reihe geschaltet und haben gleichen Wicklungssinn ; die Wicklungspaare 7, 9 und 8, 10 sind in ihrem Wicklungssinn gegeneinander geschaltet. Der Anfang A des Wicklungspaares 7, 9, das Ende E des Wicklungspaares 8, 10 sowie der Verbindungspunkt M beider Wicklungspaare 7, 9 und 8, 10 sind an einen elektrischen Abgleichkreis 13 geführt, durch den etwaige Unsymmetrien des Schalenkernes 1, die unterschiedliche Meßspannungen an den Wicklungspaaren hervorrufen können, kompensiert werden. Die Ausgangsspannung des Abgleichkreises 13 ist einem phasenempfindlichen Gleichrichter 14 zugeführt, dem ein Anzeigegerät 15, beispielsweise in Form eines Schreibers oder dergleichen, nachgeordnet ist.

Der Phasengleichrichter 14 erhält von einem Hochfrequenzgenerator 16 mit einer Frequenz von beispielsweise etwa 170 kHz eine Steuerspannung ; dem Generator 16 ist ein Leistungsverstärker 17 nachgeordnet, welcher die Wechselspannung für die Erregerwicklung 11 des Drehmomentsensors liefert.

Wie aus der Fig. 2 weiter ersichtlich, ist in die eine Leitung der Erregerwicklung 11 ein Kondensator 18 eingefügt, so daß aus der Wicklung 11 und dem Kondensator 18 ein Reihenresonanzkreis gebildet ist.

Nachstehend wird die Wirkungsweise näher erläutert.

Der von der Erregerwicklung 11 und dem Kondensator 18 gebildete Reihenresonanzkreis wird vom Generator 16 über den Verstärker 17 mit einer Frequenz von etwa 170 kHz erregt.

Ohne vorhandenes Drehmoment am Prüfling (Welle 12, Fig. 1) ist die Summe der in den Wicklungen 7 und 9 induzierten Meßspannungen gleich der Summe der in den Wicklungen 8 und 10 induzierten Meßspannungen. Da die Wicklungspaare 7, 9 und 8, 10 gegeneinander geschaltet sind, ist die Signalspannung nach einem Abgleich nach Amplitude und Phase gleich Null.

Bei einem vorhandenen Drehmoment am Prüfling tritt wegen der in den ± 45°-Richtungen unterschiedlichen Permeabilitäten der Welle 12 am Ausgang des Gleichrichters 14 eine Signalspannung auf, die dem Drehmoment direkt proportional ist.

Im Falle einer konstanten Spannung für die Erregerwicklung 11 vermindert sich diese Signalspannung mit zunehmendem Abstand des Drehmomentsensors von der Welle 12. Mit zunehmendem Abstand Welle — Sensor wird aber auch die Erregerwicklung 11 weniger bedämpft und die elektrische Güte dieser Wicklung 11 steigt mit zunehmendem Abstand. Da diese Wicklung 11 Teil eines Reihenresonanzkreises ist, vergrößert sich mit der steigenden Güte auch die an der Wicklung 11 liegende Spannung, so daß die Signalspannung durch den Resonanzkreis Wicklung 11 — Kondensator 18 mit dem Abstand Welle — Sensor weit weniger abfällt, als bei Anwendung einer konstanten Erregerspannung für die Wicklung 11.

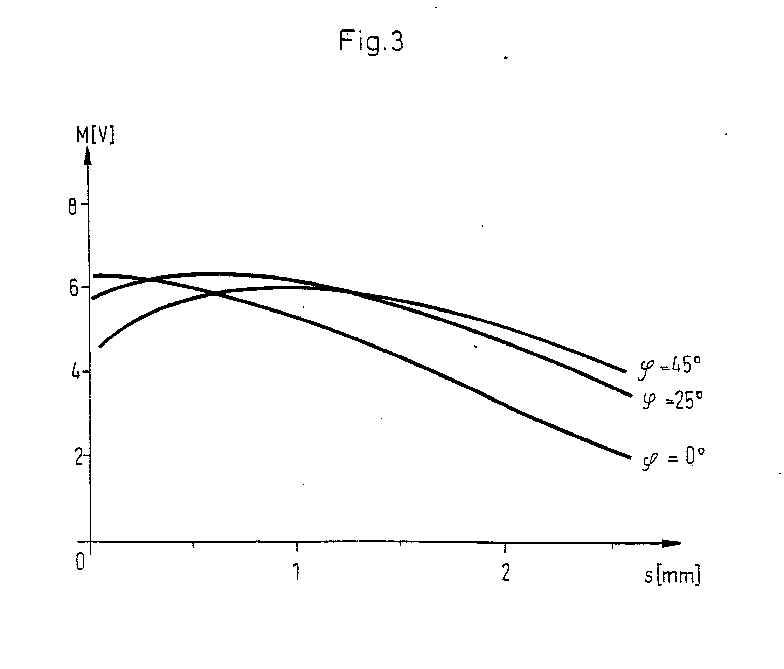

Aus der Fig. 3 ist die Änderung der bei einem Drehmoment auftretenden Signalspannung mit dem Abstand bei abgestimmtem Resonanzkreis und unterschiedlicher Phasenlage der Steuerspannung des Phasengleichrichters 14 zu ersehen.

Für einen Phasenwinkel $\varphi = 0°$ des Phasengleichrichters 14 ergibt sich für sehr kleine Abstände s Welle — Sensor eine Abstandsunabhängigkeit des Meßsignals M. Bei einem Phasenwinkel $\varphi = 25°$ sinkt die um den Abstand s = 0 erhaltene Signalspannung M geringfügig, steigt jedoch mit zunehmendem Abstand s schwach an, durchläuft ein relativ breites Maximum und fällt dann langsam ab ; das Maximum liegt bei etwa 0,7 mm Abstand. Bei einem Phasenwinkel $\varphi = 45°$ ergibt sich ein Maximumbereich von etwa 0,5 bis 1,5 mm, in welchem sich das Meßsignal M um weniger als 5 % ändert ; das Maximum liegt bei einem Abstand s von etwa 1 mm.

Der Bereich mit der günstigsten Abstandsunabhängigkeit läßt sich also über den Phasenwinkel der Steuerspannung des Phasengleichrichters 14 variieren. Die Lage wird auch durch die Erregerfrequenz relativ zur Resonanzfrequenz des Reihenschwingkreises 11, 18 mitbestimmt.

Anstelle der Bildung eines Reihenschwingkreises unter Heranziehung der Erregerwicklung 11 und eines Kondensators kann die Erregerwicklung 11 auch Teil eines Parallelschwingkreises sein, wobei diesem ein Wechselstrom konstanter Amplitude eingeprägt wird. Die an dem Schwingkreis anliegende Spannung ändert sich dann mit der sich ändernden Güte des Resonanzkreises, die wieder vom Abstand Welle — Sensor bestimmt wird. Mit Zunahme des Meßabstandes erhöht sich die Güte und damit verknüpft auch der Spannungsabfall an der Erregerwicklung 11.

In grober Näherung besteht also bei Heranziehung der Erregerwicklung 11 in Verbindung mit einem Kondensator zu einem auf die Frequenz des Generators 16 abgestimmten Resonanzschwingkreis ein linearer Zusammenhang zwischen dem Spannungsabfall an der Erregerwicklung und dem Abstand des Drehmomentsensors von der Welle 12.

Mittels einer entsprechend großen Erregeramplitude wird der Werkstoff der Welle 12 über die gesamte Fläche des Schalenkernes 1 und damit über alle vier Jochsegmente 2 bis 5 gleich weit in die Sättigung magnetisiert ; die magnetischen Feldlinien verlaufen in diesem Fall vom Innenkern 6 über die Oberfläche der Welle 12, die Jochsegmente 2 bis 5 und wieder zum Innenkern 6. Die in der Oberfläche der Welle 12 induzierten Wirbelströme beschränken den Feldlinienverlauf auf eine bestimmte Eindringtiefe in die Wellenoberfläche. Durch die Magnetisierung der Welle 12 bis in die Sättigung wird eine bei ansteigendem und wieder abfallendem Drehmoment im Meßsignal auftretende Hysterese beseitigt.

**Patentansprüche**

1. Verfahren zur berührungslosen Messung statischer und dynamischer Drehmomente einer Welle als Prüfling, wobei auf der Prüflingsoberfläche ein magnetisches Wechselfeld erzeugt wird und die durch das auftretende Drehmoment hervorgerufene Permeabilitätsänderung mittels eines Magnetjochs als elektrische Spannung abnehmbar und aus dieser ableitbar ist, dadurch gekennzeichnet, daß das Wechselfeld mittels einer Erregerwicklung (11) auf einem Innenkern (6) des Magnetjochs erzeugt wird, wobei der Prüfling (12) bis in seinen Sättigungsbereich ummagnetisiert wird und die Erregerwicklung (11) und ein dieser zugeordneter Kondensator (18) einen auf die Erregerfrequenz abgestimmten Resonanzschwingkreis bilden, bei dem die durch das auftretende Drehmoment hervorgerufene Permeabilitätsänderung der Prüflingsoberfläche mittels des sondenförmigen, an den Prüfling (12) heranbringbaren, topfförmigen Magnetjochs mit vier am Rand befindlichen Polstücken (2-5) erfaßt wird, deren Polflächen der Prüflingsoberfläche gegenüberstehen, wobei die Rand-Polstücke mit zu einer magnetischen Brücke verschalteten Wicklungen (7-10) versehen sind.

2. Verfahren nach Anspruch 1, dadurch gekennzeichnet, daß der Phasenwinkel der Steuerspannung eines phasenempfindlichen Gleichrichters (14), der mittels der Erregerspannung gesteuert ist und die Meßspannung der Meßwicklungen (7-10) erhält, derart eingestellt wird, daß das Meßsignal möglichst unabhängig vom Abstand des Prüflings (12) vom Drehmomentsensor (1) wird.

3. Anordnung zur Messung statischer und dynamischer Drehmomente einer Welle (12) als Prüfling und zur Durchführung des Verfahrens nach Anspruch 1 mit einem Erregungsteil zur Erzeugung eines magnetischen Wechselfeldes und einem Magnetjoch zur Abnahme einer Spannung, welche durch die von dem auftretenden Drehmoment bewirkten Permeabilitätsänderung hervorgerufen wird und aus der die Permeabilitätsänderung ableitbar ist, dadurch gekennzeichnet, daß das Magnetjoch sondenförmig ausgebildet ist und vier am Rand befindliche Polstücke (2-5) aufweist und die Rand-Polstücke mit zu einer magnetischen Brücke verschalteten Wicklungen (2-5) versehen sind und daß der Erregungsteil, durch den der Prüfling (12) bis in seinen Sättigungsbereich ummagnetisiert werden kann, eine Erregerwicklung (11) und auf einem Innenkern (6) des Magnetjochs und einen dieser zugeordneten Kondensator (18) aufweist, die einen auf die Erregerfrequenz abgestimmten Resonanzschwingkreis bilden.

4. Anordnung nach Anspruch 3 und zur Durchführung des Verfahrens nach Anspruch 2, dadurch gekennzeichnet, daß ein phasenempfindlicher Gleichrichter (14) vorgesehen ist, der mittels der Erregerspannung gesteuert ist, die Meßspannung der Meßeinrichtungen (7-10) erhält und dessen Phasenwinkel einstellbar ist.

## Claims

1. Method for the contactless measurement of static and dynamic turning moments of a shaft as test piece, wherein an alternating magnetic field is produced on the test piece surface and the change in permeability caused by the occurring turning moment is detectable as electrical voltage by means of a magnet yoke and derivable from this, characterised thereby, that the alternating field is generated by means of an excitation winding (11) on an internal core (6) of the magnet yoke, wherein the test piece (12) is reversed in magnetism into its saturation region and the excitation winding (11) and a capacitor (18) associated therewith form a resonant oscillatory circuit, which is tuned to the excitation frequency and in which the change in permeability of the test piece surface caused by the occurring turning moment is detected by means of the probe-shaped, pot-shaped magnetic yoke, which is advanceable to the test piece (12), with four pole pieces (2 to 5), which are disposed at the rim and the pole surfaces of which stand opposite the test piece surface, wherein the rim pole pieces are provided with windings (7 to 10) connected into a magnetic bridge.

2. Method according to claim 1, characterised thereby, that the phase angle of the control voltage of a phase-sensitive rectifier (14), which is controlled by means of the excitation voltage and receives the measurement voltage of the measurement windings (7 to 10), is set in such a manner that the measurement signal becomes as independent as possible of the spacing of the test piece (12) from the turning moment sensor (1).

3. Arrangement for the measurement of static and dynamic turning moments of a shaft as test piece and for the performance of the method according to claim 1 with an excitation part for the production of an alternating magnetic field and a magnet yoke for the picking-up of a voltage, which is caused by the change in permeability effected by the occurring turning moment and from which the change in permeability is derivable, characterised thereby, that the magnet yoke is constructed in probe shape and displays four pole pieces (2 to 5) disposed at the rim and the rim pole pieces are provided with windings (7 to 10) connected into a magnetic bridge and that the excitation part, by which the test piece (12) can be reversed in magnetism into its saturation region, displays an excitation winding (11) on an internal core (6) of the magnet yoke and a capacitor (18) associated therewith, which form a resonant oscillatory circuit tuned to the excitation frequency.

4. Arrangement according to claim 3 and for the performance of the method according to claim 2, characterised thereby, that a phasesensitive rectifier (14) is provided, which is controlled by means of the excitation voltage, receives the measurement voltage of the measurement windings (7 to 10) and the phase angle of which is settable.

## Revendications

1. Procédé pour la mesure sans contact mécanique de couples statiques et dynamiques sur un arbre constituant l'échantillon, un champ magnétique alternatif étant produit à la surface de l'échantillon et la variation de perméabilité produite par le couple appliqué étant décelée à l'aide d'une culasse magnétique, sous forme d'une tension électrique dont elle peut être dérivée, ledit procédé étant caractérisé en ce que le champ alternatif est produit par un enroulement d'excitation (11) sur un noyau intérieur (6) de la culasse magnétique, l'échantillon (12) subissant une inversion de magnétisme jusque dans son domaine de saturation ; et l'enroulement d'excitation (11) et un condensateur (18) qui lui est affecté forment un circuit résonnant accordé à la fréquence d'excitation et dans lequel la variation de perméabilité de la surface de l'échantillon produite par le couple appliqué est décelée à l'aide de la culasse magnétique en forme de sonde cylindrique fermée à un bout, se plaçant sur l'échantillon et portant à sa périphérie quatre pièces polaires (2-5) dont les faces polaires sont en regard de la surface de l'échantillon et munies d'enroulements (7-10) reliés en un pont magnétique.

2. Procédé selon revendication 1, caractérisé en ce que l'angle de phase de la tension de commande d'un démodulateur de phase (14), qui est commandé par la tension d'excitation et reçoit la tension des enroulements de mesure (7-10), est ajusté de façon que le signal de mesure soit pratiquement indépendant de la distance de l'échantillon (12) au capteur de couple (1).

3. Dispositif pour la mesure de couples statiques et dynamiques d'un arbre (12) constituant l'échantillon et pour la mise en œuvre du procédé selon revendication 1, avec une partie excitation pour la production d'un champ magnétique alternatif et une culasse magnétique pour le prélèvement d'une tension qui est produite par la variation de perméabilité résultant du couple appliqué et dont la variation de perméabilité peut être dérivée, ledit dispositif étant caractérisé en ce que la culasse magnétique est réalisée en forme de sonde et porte à sa périphérie quatre pièces polaires (2-5) munies d'enroulements (7-10) reliés en un pont magnétique ; et la partie excitation, qui permet d'inverser le magnétisme de l'échantillon (12) jusque dans son domaine de saturation, comprend un enroulement d'excitation (11) sur un noyau intérieur (6) de la culasse magnétique et un condensateur (18), affecté audit enroulement, qui forment un circuit résonnant accordé à la fréquence d'excitation.

4. Dispositif selon revendication 3 et pour la mise en œuvre du procédé selon revendication 2, caractérisé par un démodulateur de phase (14) qui est commandé par la tension d'excitation, reçoit la tension des enroulements de mesure (7-10) et présente un angle de phase ajustable.

Fig.1

Fig.2

## Fig.3